# EUROPEAN PATENT SPECIFICATION

(11) **EP 4 319 959 B1**
(45) Date of publication and mention of the grant of the patent: **04.11.2026**
(21) Application number: 22785554.1
(22) Date of filing: 08.04.2022
(51) Int. Cl.: B29C 57/02, B29C 57/04, B25F 5/00, B21D 41/02

(54) **EXPANSION TOOL**
EXPANSIONSWERKZEUG
OUTIL D'EXPANSION

(30) Priority: 09.04.2021 US 202163172874 P; 27.01.2022 US 202263303732 P
(43) Date of publication of application: 14.02.2024
(73) Proprietor: Milwaukee Electric Tool Corporation, Brookfield, WI 53005 (US)
(72) Inventor: DAVIES, Peter, J., Milwaukee, WI 53207 (US); KUHLS, Alex, R., Menomonee Falls, WI 53051 (US)
(74) Representative: Forresters IP LLP
(86) International application number: PCT/US2022/024077
(87) International publication number: WO 2022/217092

(56) References cited:
- WO-A1-2009/000966
- US-A1- 2011 239 425
- US-A1- 2020 261 958
- US-A1- 2020 261 959
- US-A1- 2020 261 959
- US-A1- 2021 023 767
- US-B1- 8 511 133
- US-B2- 8 302 448

## Description

### FIELD OF THE INVENTION

The present disclosure relates to pipe and tubing expansion tools. More particularly, the present disclosure relates to PEX (cross-linked polyethylene) expansion tools.

### BACKGROUND OF THE INVENTION

PEX tubing is commonly used in plumbing applications as a substitute for copper pipe. PEX tubing can be coupled to fittings in various ways. Crimp rings or clamp rings can be compressed onto the outside of PEX tubing over a fitting to couple the PEX tubing to the fitting. Alternatively, the PEX tube can be expanded and the fitting inserted into the expanded end of the PEX tube. The PEX tube elastically recovers around the fitting to form a tight connection. Tools used to expand PEX tube for this purpose are referred to as PEX expansion tools.

US2020/261959 teaches an expansion tool which includes a housing, a motor supported within the housing, a mandrel, and a drive mechanism configured to convert a rotational input from the motor into translational movement of the mandrel. US2011/239425 teaches a tool operable to expand an end of a pipe including a plurality of jaws movable between a closed position and an expanded position and rotatable about a longitudinal axis and a rotation collar rotationally coupled to each of the plurality of jaws. US2021/023767 teaches an expansion toolhead configured to enable the expansion of multiple different sized diameters of cross-linked polyethylene (PEX) tubing with a single expansion toolhead.

### SUMMARY OF THE INVENTION

The present invention provides an expansion tool as defined in claim 1. Preferable features of the expansion tool are defined in the dependent claims.

### BRIEF DESCRIPTION OF THE DRAWINGS

FIG. 1 is a perspective view of an expansion tool according to an embodiment of the present disclosure.
FIG. 2 is a cross-sectional view illustrating a drive assembly of the expansion tool of FIG. 1.
FIG. 3 is a perspective view of the expansion tool of FIG. 1, illustrating a shift actuator of the expansion tool.
FIG. 4 is a perspective view of the expansion tool of FIG. 1 with portions removed, illustrating the shift actuator.
FIG. 5 is a perspective view of a portion of the expansion tool of FIG. 1, illustrating a rotation collar.
FIG. 6A is a perspective view illustrating a first embodiment of a head for use with the expansion tool of FIG. 1.
FIG. 6B is a perspective view illustrating a second embodiment of a head for use with the expansion tool of FIG. 1.
FIG. 7 is an exploded view illustrating a portion of the expansion tool of FIG. 1 including the rotation collar and the head.
FIG. 8 is a cross-sectional view illustrating the head of FIG. 6B in a partially installed position on the expansion tool of FIG. 1.
FIG. 9 is a cross-sectional view illustrating the head of FIG. 6B in a fully installed position on the expansion tool of FIG. 1.
FIG. 10A is a cross-sectional view illustrating a third embodiment of a head for use with the expansion tool of FIG. 1.
FIG. 10B is a perspective view of an inner cone of the head of FIG. 10A.
FIG. 11A is a cross-sectional view illustrating a fourth embodiment of a head for use with the expansion tool of FIG. 1.
FIG. 11B is a perspective view of an inner cone of the head of FIG. 11A.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

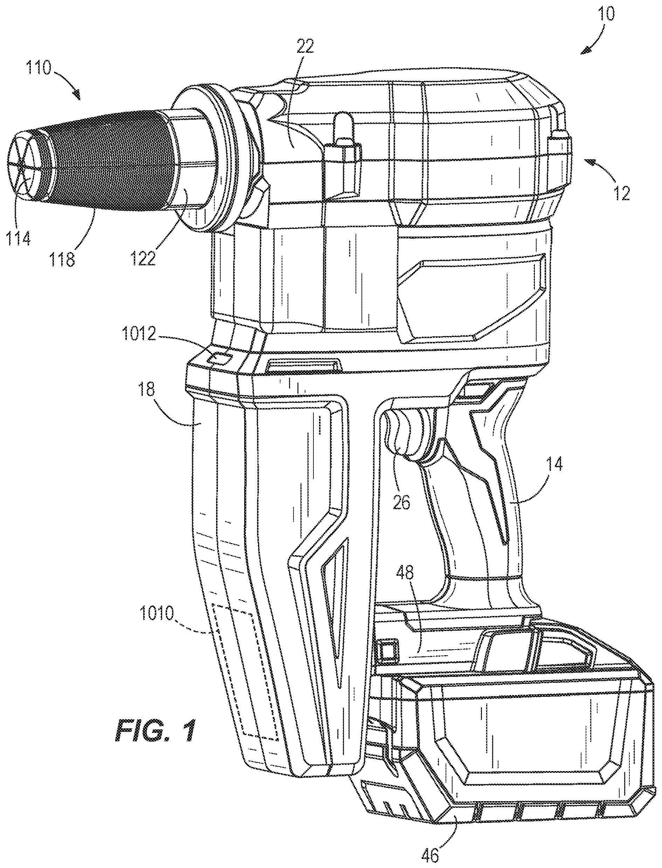

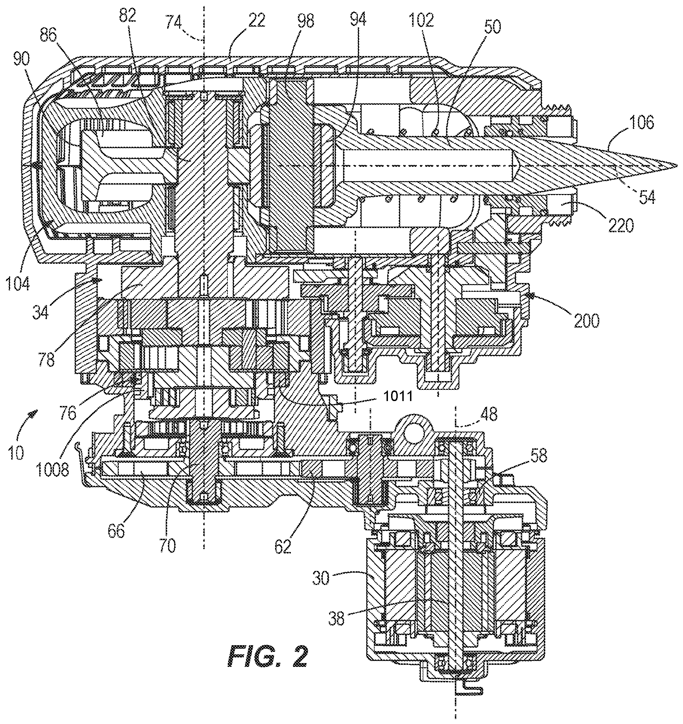

FIG. 1 illustrates an expansion tool 10 usable to expand PEX tubing prior to inserting a fitting. The expansion tool 10 includes a housing 12 with a handle portion 14 configured to be gripped by a user during operation of the expansion tool 10. The illustrated housing 12 also includes a motor housing portion 18 positioned in front of the handle portion 14, and a drive housing portion 22 positioned above the motor housing portion 18 and the handle portion 14. An actuator 26 (e.g., a trigger) for operating the expansion tool 10 is positioned on the handle portion 14. A motor 30 (e.g., a brushless DC electric motor) is supported within the motor housing portion 18, and a drive mechanism 34 is supported within the drive housing portion 22 (FIG. 2).

The illustrated expansion tool 10 includes a battery 46 (FIG. 1) configured to provide electrical power to the motor 30 (e.g., in response to depressing the actuator 26). The battery 46 is preferably a rechargeable battery pack with a plurality of lithium-based cells and is removably coupled to a battery receptacle 48 located at a base of the handle 14 (FIG. 1). In some embodiments, the battery 46 has a nominal output voltage of about 18 volts. In other embodiments, the battery 46 has a nominal output voltage of about 12 volts. In other embodiments, the battery 46 may have other nominal output voltages (e.g., 24 volts, 36 volts, 40 volts, etc.).

Referring to FIG. 2, the motor 30 includes a rotor or motor shaft 38 that rotates about a first axis or motor axis 42 to provide a rotational input to the drive mechanism 34. In the illustrated embodiment, the motor shaft 38 is rotationally supported by three bearings 43 spaced along the motor axis 42. The drive mechanism 34 converts the rotational input from the motor shaft 38 into a translational movement of a mandrel 50 along a second axis or mandrel axis 54. In the illustrated embodiment, the mandrel axis 54 is perpendicular to the motor axis 42, which contributes to a compact overall length of the expansion tool 10.

The illustrated drive mechanism 34 includes a first gear 58 coupled for co-rotation with the motor shaft 38 about the motor axis 42, a second gear 62 meshed with the first gear 58, and a third gear 66 meshed with the second gear 62. The drive mechanism 34 provides a speed reduction and torque increase from the motor shaft 38 to the third gear 66. For example, in the illustrated embodiment, the second gear 62 is larger in diameter and includes a greater number of teeth than the first gear 58, and the third gear 66 is larger in diameter and includes a greater number of teeth than the second gear 62.

With continued reference to FIG. 2, the third gear 66 is coupled for co-rotation with a shaft 70, such that the third gear 66 and the shaft 70 co-rotate together about a third axis or drive axis 74 that is parallel to the motor axis 42 and perpendicular to the mandrel axis 54. The shaft 70 provides a rotational input to a transmission 76, which in the illustrated embodiment is a multi-stage planetary transmission (e.g., a four-stage planetary transmission). In other embodiments, other types of transmissions 76 may be used. In the illustrated embodiment, the transmission 76 is shiftable to provide the expansion tool 10 with two different operating speeds.

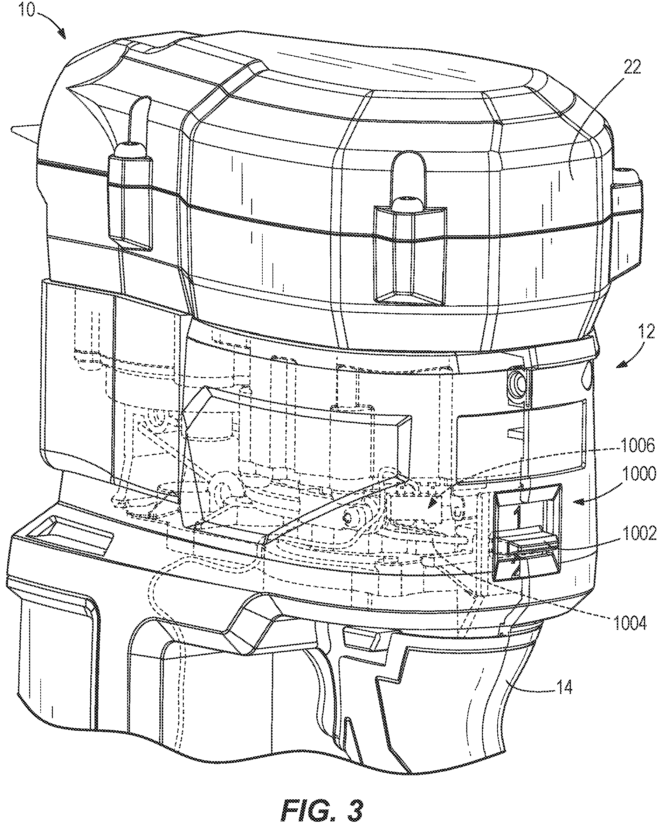

More specifically, with reference to FIGS. 3-4, the expansion tool 10 includes a shifting assembly 1000 which may alternate between a high speed configuration or a low speed configuration. The illustrated shifting assembly 1000 includes an actuator 1002 positioned on the housing 12 of the expansion tool 10 and a shifting arm 1004 connected to the actuator 1002. The actuator 1002 is located on a rear side of the housing 12, above the handle portion 14 in the illustrated embodiment; however, the actuator 1002 may be located in other positions on the housing 12 in other embodiments.

The shifting arm 1004 is coupled to a movable ring gear 1008 (FIG. 2), which is part of an intermediate stage of the multi-stage planetary transmission 76. The shifting arm 1004 is pivotable to translate movement of the actuator 1002 into axial movement of the movable ring gear 1008. When the shifting assembly 1000 is in the low speed configuration, the movable ring gear 1008 engages a locking ring 1011, which prevents the ring gear 1008 from rotating. When the shifting assembly 1000 is in the high speed configuration, the movable ring gear 1008 disengages from the locking ring 1011, permitting free rotation of the ring gear 1008.

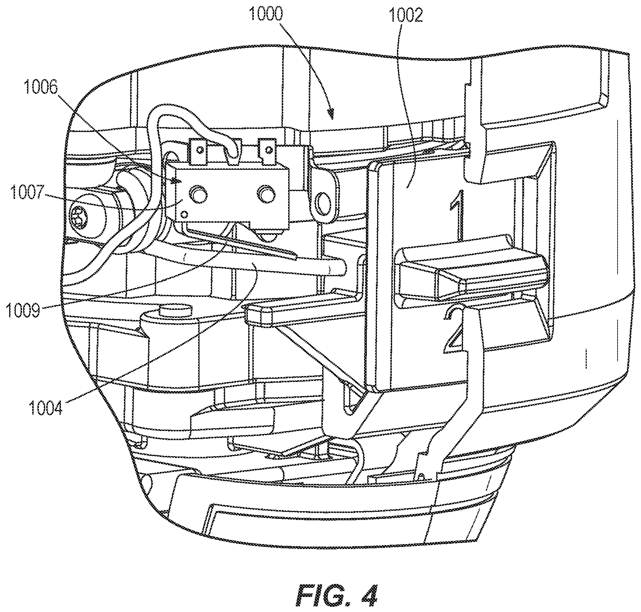

Referring to FIG. 4, the shifting assembly 1000 includes a shifting detector 1006 configured to detect when the shifting assembly 1000 is actuated between the high speed configuration and the low speed configuration. In the illustrated embodiment, the shifting detector 1006 includes a micro switch 1007 with a spring lever 1009 that extends into the path of the shifting arm 1004. The shifting arm 1004 engages the spring lever 1009 to close the micro switch 1007 when the shifting assembly 1000 is in the high speed configuration. When the shifting assembly 1000 is moved to the low speed configuration, the spring lever 1009 moves with the shifting arm 1004 to open the micro switch 1007. In other embodiments, the position of the micro switch 1007 may be varied such that the micro switch 1007 is closed when the shifting assembly 1000 is in the low speed configuration and opens when the shifting assembly 1000 is moved to the high speed configuration.

The shifting detector 1006 is electrically coupled to a controller 1010 (FIG. 1) of the expansion tool 10. The controller 1010 includes a plurality of electrical and electronic components that provide power, operational control, and protection to the components and modules within the controller 1010. In particular, the controller 1010 may include, among other things, an electronic processor (e.g., a programmable microprocessor, microcontroller, or similar device), non-transitory, machine-readable memory, an input/output interface, and the like. The components and modules of the controller 1010 may be mounted on a PCB supported within the housing 12. The electronic processor is communicatively coupled to the memory and configured to retrieve from memory and execute, among other things, instructions related to the control processes and methods described herein.

The shifting detector 1006 provides a signal to the controller 1010 of the expansion tool 10 to indicate if a shift is taking place. For example, the controller 1010 may determine that a shift from the low speed configuration to the high speed configuration is taking place if the micro switch 1007 changes state from its open position to its closed position. The controller 1010 may similarly determine that a shift from the high speed configuration to the low speed configuration is taking place if the micro switch 1007 changes state from its closed position to its open position. In other embodiments, the shifting detector 1006 may include other sensors capable of determining whether a shift is taking place. For example, in other embodiments, the shifting detector 1006 may include one or more optical sensors, magnetic sensors, position sensors, or the like capable of determining whether a shift is taking place by monitoring movement of the actuator 1002, ring gear 1008, and/or the shifting arm 1004.

In the illustrated embodiment, the expansion tool 10 includes a light source 1012 positioned on a front side of the housing 12 (FIG. 1). The light source 1012 may be configured to illuminate a workpiece during operation of the expansion tool 10. The light source 1012 may also be controlled by the controller 1010 to provide an operator with visual feedback associated with operation of the shifting assembly 1000.

In operation, the shifting assembly 1000 may be in either the high speed configuration or the low speed configuration. When the operator depresses the actuator 26 and energizes the motor 30, the controller 1010 monitors the shifting detector 1006. If the operator attempts to shift the shifting assembly 1000 between the high speed position and the low speed position by actuating the actuator 1002 while the motor 30 is energized, the shifting detector 1006 provides a signal to the controller 1010 indicating that a shift is occurring. In response to this signal, the controller 1010 automatically deenergizes the motor 30. By deenergizing the motor 30, the gears of the transmission 76 slow, and adverse impacts on the gears that may occur by shifting during operation are lessened. In some embodiments, the controller 1010 may also control the light source 1012 to produce a predetermined blinking pattern in order to communicate to the operator that the shut off was intentional. In other embodiments, other indicators, including but not limited to audible indicators, colored LEDs, LED/LCD displays, or the like may be used to alert the user to the intentional shut-off of the motor 30. The operator can then resume operation by depressing the actuator 26 once more, thereby energizing the motor 30.

With reference to FIG. 2, the illustrated transmission 76 includes an output member 78 (i.e., a carrier of the final stage of the planetary transmission 76) coupled to a drive shaft 82 such that the drive shaft 82 co-rotates with the output member 78 about the drive axis 74. A cam 86 is coupled for co-rotation with the drive shaft 82. The cam 86 includes a contact surface 90 at its outer periphery. The contact surface 90 engages a follower or roller 94, which in turn is coupled to the mandrel 50 via a pin 98 extending vertically through the mandrel 50. The follower 94 is biased into engagement with the contact surface 90 of the cam 86 by a spring 102 acting on the mandrel 50.

The contact surface 90 of the cam 86 has a variable radius such that rotation of the cam 86 moves the follower 94 to reciprocate the mandrel 50 along the mandrel axis 54. The cam 86, follower 94, spring 102, and mandrel 50 are supported within a frame 104, which may be similar to the frame 627 described and illustrated in U.S. Patent Application Publication No. 2020/0261959, filed as Application No. 16/795,742 on February 20, 2020, in the name of Milwaukee Electric Tool Corporation.

The mandrel 50 includes a conical outer surface 106 engageable with a head or working element 110 of the expansion tool 10 (FIG. 1). In the illustrated embodiment, the working element 110 includes a plurality of jaws 114. The conical outer surface 106 of the mandrel 50 (FIG. 2) is engageable with interior sides of the jaws 114 as the mandrel 50 moves from a retracted position to an extended position along the mandrel axis 54. This expands the jaws 114 radially outward from a closed position (illustrated in FIG. 1) to an expanded position. The jaws 114 may be biased toward the closed position (e.g., by an O-ring or toroidal spring surrounding the jaws 114, by tension springs interconnecting adjacent jaws 114, or by any other suitable arrangement), such that the jaws 114 return to the closed position when the mandrel 50 retracts along the mandrel axis 54.

Referring to FIG. 1, each of the jaws 114 has an exterior side with a tapered portion 118 and a sizing portion 122. When the working element 110 is in the closed position, adjacent jaws 114 abut one another such that the tapered portions 118 define a generally frustoconical shape. The sizing portions 122 collectively define a constant diameter or maximum cross-sectional dimension when the jaws 114 are in the closed position, with the diameter being sized for proper expansion of PEX tubing of a desired nominal size. In other embodiments, the jaws 114 may be formed with other linear and/or non-linear profiles along the length of each jaw 114. In some embodiments, the working element 110 may be removably coupled to the expansion tool 10 such that the jaws 114 may be interchanged with jaws having other sizes/geometries. For example, the working element 110 may be part of an expansion tool system including a plurality of interchangeable working elements, such as the expansion tool system 905 described and illustrated in U.S. Patent Application Publication No. 2020/0261959.

The expansion tool 10 may include an automatic jaw rotation mechanism 200, such as the automatic jaw rotation mechanism 200 described and illustrated in U.S. Patent Application No. 17/187,265, filed February 26, 2021, in the name of Milwaukee Electric Tool Corporation. The automatic jaw rotation mechanism 200 is configured to automatically rotate the jaws 114 of the working element 110 about the mandrel axis 54 during operation of the expansion tool 10.

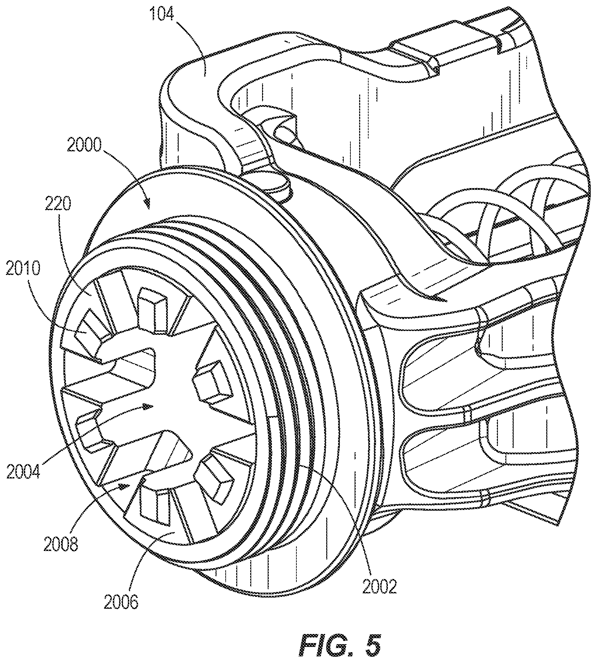

Referring to FIG. 5, in the illustrated embodiment, the automatic jaw rotation mechanism 200 includes a rotation collar 220 rotatably supported by the frame 104 adjacent a connection end 2000 of the frame 104. The connection end 2000 includes a set of external threads 2002. The rotation collar 220 includes a central bore 2004 which allows the mandrel 50 to pass through the rotation collar 220 and engage the jaws 114. The rotation collar 220 includes an end face 2006 having a plurality of slots 2008 extending from the end face 2006 in an axial direction (i.e. a rearward direction). A plurality of teeth 2010 extends forwardly from the end face 2006. The teeth 2010 are arranged such that each tooth 2010 is disposed between an adjacent pair of slots 2008. The illustrated teeth 2010 are formed as truncated pyramids. In other embodiments, the teeth 2010 may be formed in other suitable shapes.

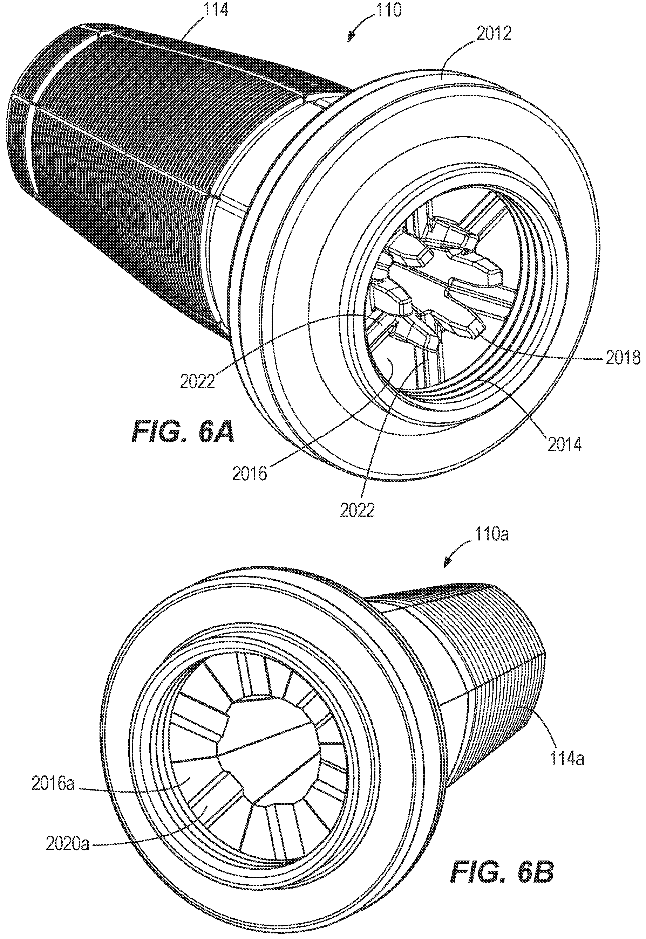

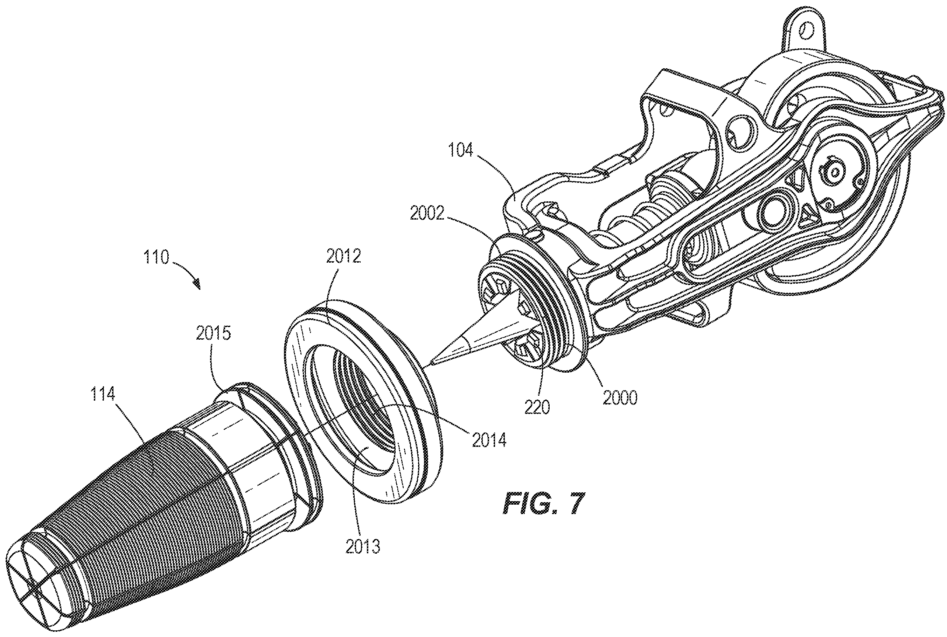

With reference to FIGS. 6A and 7, the working element 110 is removably coupled to the frame 104 by a retaining sleeve 2012. The retaining sleeve 2012 includes an internal groove 2013 and a set of internal threads 2014. Each of the jaws 114 includes a flange 2015 that is received within the internal groove 2013 of the retaining sleeve 2012. The jaws 114 are rotatable relative to the retaining sleeve 2012, as the flanges 2015 are slidable within the internal groove 2013. The internal threads 2014 of the retaining sleeve 2012 cooperate with the external threads 2002 of the connection end 2000 to removably couple the retaining sleeve 2012 to the frame 104

Referring to FIG. 6A, each of the jaws 114 of the working element 110 includes a base surface 2016, which faces rearward when the working element 110 is coupled to the expansion tool 10. The base surface 2016 includes a projection or tab 2018 and two grooves 2022 located on either side of the tab 2018, along the edges of the base surface 2016. When the tabs 2018 are tapered outward in the rearward direction to match the profile of the conical outer surface 106 mandrel 50.

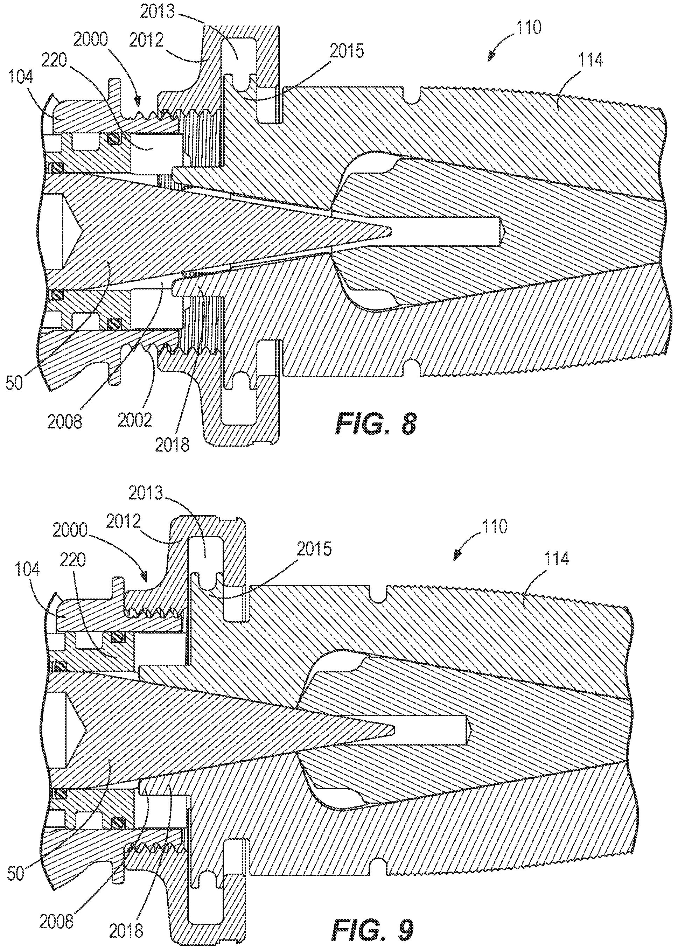

As illustrated in FIGS. 8 and 9, when attaching the working element 110 to the expansion tool 10, an operator positions the retaining sleeve 2012 adjacent the connection end 2000 of the frame. In order to couple the jaws 114 to the rotation collar 220, the tabs 2018 of the jaws 114 must align with the slots 2008 formed in the end face 2006 of the rotation collar 220. As shown in FIG. 8, the jaws 114 can then be rotated relative to the retaining sleeve 2012 and the frame 104 until the tabs 2018 are aligned with the slots 2008, at which point the retaining sleeve 2012 can be rotated relative to the frame 104 to begin threading the retaining sleeve 2012 on to the external threads 2002 of the connection end 2000.

Continued rotation of the retaining sleeve 2012 in a tightening direction causes the tabs 2018 to travel further into the slots 2008, thereby rotatably coupling the rotation collar 220 and the jaws 114. Once the retaining sleeve 2012 is fully installed on the connection end 2000, the teeth 2010 (FIG. 5) engage the grooves 2022 (FIG. 6A) to provide an additional torque-transmitting connection between the rotation collar 220 and the jaws 114.

In operation, the jaws 114 (FIG. 1) of the expansion tool 10 are inserted into an end of a segment of PEX tubing to be expanded such that the tapered portions 118 abut an interior wall of the PEX tubing. The operator depresses the actuator 26, which energizes the motor 30.

Once energized, the motor 30 rotates the cam 86 via the drive mechanism 34 to perform cycles of axially extending and retracting the mandrel 50 along the mandrel axis 54 (FIG. 2), thereby expanding and contracting the jaws 114. As the jaws 114 expand, the tapered portions 118 engage with the interior wall of the PEX tubing to gradually expand the PEX tubing. The expansion tool 10 continues the cycles of axially extending and retracting the mandrel 50. The operator pushes the jaws 114 deeper into the PEX tubing with each successive expansion until the sizing portions 122 of the jaws 114 are fully inserted into the PEX tubing. This indicates to the operator that expansion is complete. The jaws 114 are withdrawn from the PEX tubing, and the operator inserts a fitting into the end of the PEX tubing. The interior of the PEX tubing then elastically recovers and secures the fitting in place.

The automatic rotation mechanism 200 operates to incrementally rotate the jaws 114 during each cycle of axially extending and retracting the mandrel 50. The automatic rotation mechanism 200 incrementally rotates the rotation collar 220. As the rotation collar 220 rotates, the slots 2008 engage the tabs 2018 and transfer the rotation to the jaws 114. The engagement between the tabs 2018 and the slots 2008 ensure that rotation is transferred without any slippage. Additionally, the teeth 2010 engage the grooves 2022 to provide an additional torque-transmitting connection between the rotation collar 220 and the jaws 114. The retaining sleeve 2012 remains stationary and retains the jaws 114 adjacent the connection end 2000 of the frame 104.

The jaws 114 are preferably incrementally rotated during each retraction cycle by an angular displacement that is less than the angular spacing of the jaws 114. For example, when the working element 110 includes six jaws, the jaws are spaced by sixty degrees, and the automatic rotation mechanism 200 is operable to rotate the jaws 114 by an angular displacement less than sixty degrees during each retraction cycle. In some embodiments, the jaws 114 are rotated by an angular displacement less than 45 degrees, and in some embodiments, the jaws 114 are rotated by an angular displacement less than 20 degrees.

By rotating the jaws 114 by an angular displacement that is less than the angular spacing of the jaws 114, the jaws 114 smooth out any indentations that may be formed on the interior wall of the PEX tubing during expansion. This promotes a quality seal with the subsequently inserted fitting. Furthermore, by rotating the jaws 114 while the jaws 114 are retracting, friction between the jaws 114 and the PEX tubing is reduced. In addition, rotating the jaws 114 simultaneously while the jaws 114 are retracting advantageously reduces the cycle time of the expansion tool 10.

FIG. 6B illustrates a conventional working element 110a, which may alternatively be coupled to the expansion tool 10. The working element 110a does not include the tabs 2018 and instead only includes the grooves 2020a formed on the base surfaces 2016a of the jaws 114a. Because the rotation collar 220 includes the teeth 2010, the teeth 2010 are received within the grooves 2020a when the working element 110a is coupled to the frame 104 to couple the jaws 114a for co-rotation with the rotation collar 220. Thus, the rotation collar 220 of the expansion tool 10 is advantageously backwards-compatible with conventional working elements, such as the working element 110a.

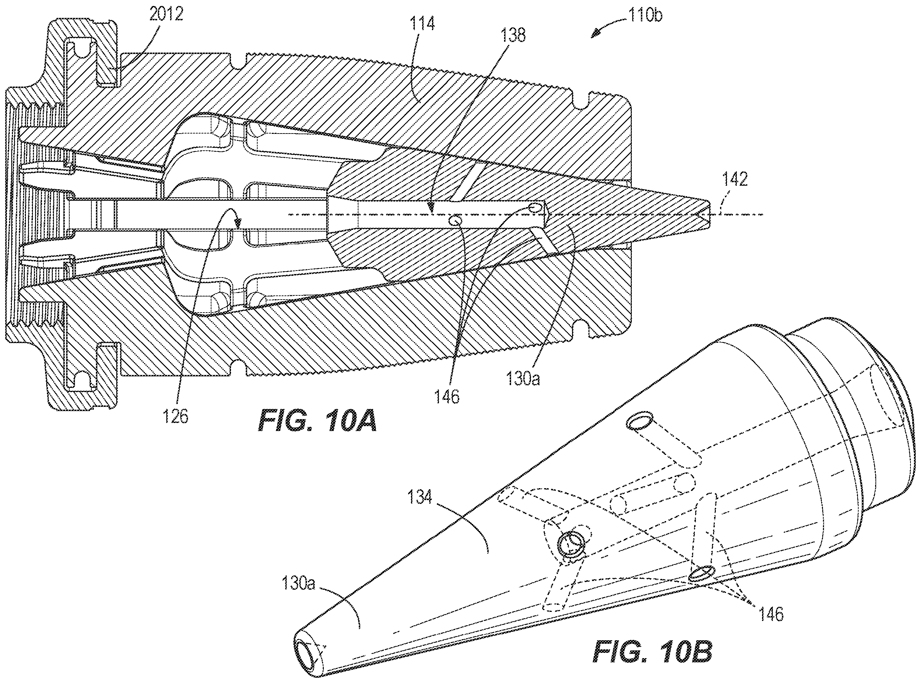

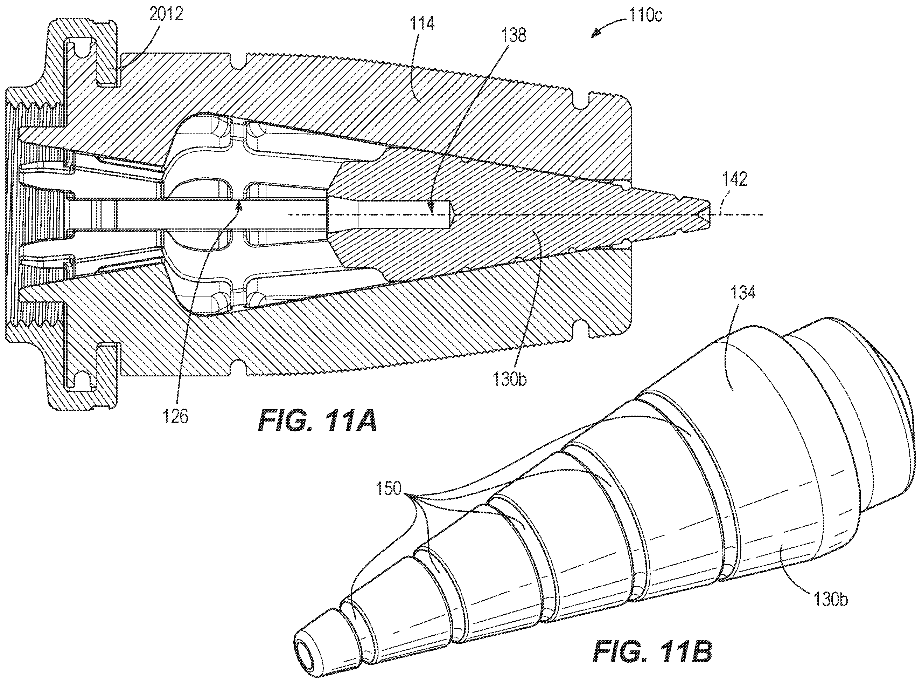

FIGS. 10A and 11A illustrate additional embodiments of working elements 110b and 110c which may be coupled to the expansion tool 10 (e.g., by the retaining sleeve 2012). In each case, the interior sides of jaws 114 define an interior cavity 126 in which an inner cone 130a (FIG. 10A), 130b (FIG. 10B) is disposed. The inner cone 130a, 130b defines an outer conical surface 134 that abuts and engages the interior sides of the jaws 114 and an inner bore 138 that extends at least partially along the length of the inner cone 130 along a conical axis 142.

The inner cone 130a, 130b is engageable with the mandrel 50 and slidable along the mandrel axis 54 therewith. More specifically, the mandrel 50 engages the inner cone 130a, 130b with the mandrel 50 at least partially disposed in the inner bore 138 of the inner cone 130a, 130b. As the mandrel 50 engages the inner cone 130a, 130b and proceeds in a linear direction along the mandrel axis 54, the inner cone 130a, 130b engages the interior sides of jaws 114 thereby transitioning the jaws from the closed position (e.g., shown in FIG. 9) to the expanded position (as shown in FIGS. 10A and 11A).

As shown in FIGS. 10B and 11B, the inner cone 130a, 130b may include features for distributing and/or retaining lubricant (such as grease, oil, or other appropriate material for reducing friction between surfaces moving relative to one another) at the interface of the outer conical surface 134 of the inner cone 130a, 130b and the interior sides of jaws 114.

For example, as shown in FIG. 10B, the inner cone 130a includes a plurality of bores 146 extending from the outer conical surface 134 to the inner bore 138 and fluidly communicating with the inner bore 138, such that lubricant is allowed to move through the inner bore 138 at the engagement with the mandrel 50 to the outer conical surface 134 via bores 146. Lubricant is thereby applied at the interface of the outer conical surface 134 and the interior sides of jaws 114.

In another example, as shown in FIG. 11B, the inner cone 130b includes a plurality of grooves 150 disposed on the outer conical surface 134 spaced along the conical axis 142 and extending circumferentially about the outer conical surface 134 and radially inward toward the inner bore 138. Lubricant may be disposed in the grooves 150 whereby the interface of the outer conical surface 134 and the interior sides of jaws 114 is maintained in a lubricated state.

## Claims

1. An expansion tool (10), comprising:
a housing (12);
a collar (220) rotatably coupled to the housing (12), the collar including a plurality of slots (2008);
a plurality of jaws (114, 114a), each jaw having a projection (2018) received in a corresponding one of the plurality of slots (2008) such that the jaws (114a) (114) are coupled for co-rotation with the collar;
a mandrel (50) moveable relative to the housing (12) between a retracted position and an extended position, the mandrel (50) engageable with the jaws to expand the jaws in response to movement of the mandrel (50) to the extended position;
a drive mechanism (34) including a rotatable cam (86), wherein rotation of the cam (86) moves the mandrel (50) between the retracted position and the extended position; and
a rotation mechanism (200) configured to incrementally rotate the collar, **characterized in that**:
the collar (220) includes a front surface (2006) facing the jaws, and the slots (2008) extend in a rearward direction from the front surface; and
the collar includes a plurality of teeth (2010) extending in a forward direction from the front surface.

2. The expansion tool of claim 1, wherein the housing at least partially encloses a frame (104) having a connection end (2000), wherein the expansion tool further comprises a retaining sleeve (2012) surrounding the plurality of jaws, and wherein the plurality of jaws is configured to be coupled to the housing by coupling the retaining sleeve to the connection end of the frame.

3. The expansion tool of claim 2, wherein the retaining sleeve is configured to be threadably coupled to the connection end.

4. The expansion tool of any preceding claim, wherein the plurality of jaws is a first plurality of jaws, and the first plurality of jaws is interchangeable with a second plurality of jaws.

5. The expansion tool of claim 4, wherein each jaw of the second plurality of jaws includes a recess (2020a, 2022) formed in a rear surface of the jaw, and each recess is configured to receive a corresponding one of the plurality of teeth to couple the second plurality of jaws for co-rotation with the collar.

6. The expansion tool of any preceding claim, wherein the drive mechanism is operable in a high speed configuration and a low speed configuration, and wherein the expansion tool further comprises:
a shifting assembly (1000) including an actuator (1002) operable to shift the drive mechanism between the high speed configuration and the low speed configuration; and
a shifting detector (1006) configured to detect a shift between the high speed configuration and the low speed configuration.

7. The expansion tool of any preceding claim, further comprising a cone (130a, 130b) received within the plurality of jaws and engageable with inner surfaces of the plurality of jaws, wherein the mandrel is configured to engage the cone to move the cone with the mandrel to expand the jaws as the mandrel moves toward the extended position.

8. The expansion tool of claim 7, wherein the cone includes a plurality of grooves (150) containing grease to lubricate the inner surfaces of the plurality of jaws.

9. The expansion tool of claim 7, wherein the cone includes a plurality of bores (146) extending from an outer conical surface (134) to an inner bore (138), the bores defining fluid pathways to convey lubricant between the inner bore and an outer surface of the cone.

10. The expansion tool of claim 6, wherein the shifting detector includes a micro switch (1007).

11. The expansion tool of claim 10, wherein the shifting assembly includes a shifting arm (1004) engageable with the micro switch.

12. The expansion tool of claim 6, 10 or 11, further comprising a motor (30) configured to rotate the rotatable cam via the drive mechanism and a controller (1010) in communication with the shifting detector, wherein the controller is configured to deenergize the motor in response to the shifting detector detecting the shift.

13. The expansion tool of claim 12, further comprising an indicator, wherein the controller is configured to illuminate the indicator in response to the shifting detector detecting the shift.

14. The expansion tool of claim 6, 10 or 11, wherein the drive mechanism includes a multi-stage planetary transmission (76), wherein the transmission includes a movable ring gear (1008) and a locking ring (1011), wherein the movable ring gear is engaged with the locking ring in the low speed configuration, and wherein the movable ring gear is disengaged from the locking ring in the high speed configuration.

15. The expansion tool of claim 7, wherein the cone includes means (138, 146, 150) for containing grease to lubricate the inner surfaces of the plurality of jaws.

## Patentansprüche

1. Expansionswerkzeug (10), umfassend:
ein Gehäuse (12);
einen Bund (220), der drehbar an das Gehäuse (12) gekoppelt ist, wobei der Bund eine Vielzahl von Schlitzen (2008) beinhaltet;
eine Vielzahl von Backen (114, 114a), wobei jede Backe einen Vorsprung (2018) aufweist, der in einem entsprechenden der Vielzahl von Schlitzen (2008) aufgenommen ist, sodass die Backen (114a) (114) zum Mitdrehen mit dem Bund gekoppelt sind;
einen Dorn (50), der relativ zu dem Gehäuse (12) zwischen einer eingefahrenen Position und einer ausgefahrenen Position bewegbar ist, wobei der Dorn (50) mit den Backen in Eingriff bringbar ist, um die Backen als Reaktion auf eine Bewegung des Dorns (50) in die ausgefahrene Position zu expandieren;
einen Antriebsmechanismus (34), der einen drehbaren Nocken (86) beinhaltet, wobei eine Drehung des Nockens (86) den Dorn (50) zwischen der eingefahrenen Position und der ausgefahrenen Position bewegt; und
einen Drehmechanismus (200), der dazu konfiguriert ist, den Bund inkremental zu drehen,
**dadurch gekennzeichnet, dass**:
der Bund (220) eine den Backen zugewandte Vorderfläche (2006) beinhaltet und sich die Schlitze (2008) von der Vorderfläche in einer Rückwärtsrichtung erstrecken; und
der Bund eine Vielzahl von Zähne (2010) beinhaltet, die sich von der Vorderfläche in einer Vorwärtsrichtung erstrecken.

2. Expansionswerkzeug nach Anspruch 1, wobei das Gehäuse mindestens teilweise einen ein Verbindungsende (2000) aufweisenden Rahmen (104) umschließt, wobei das Expansionswerkzeug ferner eine Haltehülse (2012) umfasst, die die Vielzahl von Backen umgibt, und wobei die Vielzahl von Backen dazu konfiguriert ist, an das Gehäuse gekoppelt zu sein, indem die Haltehülse an das Verbindungsende des Rahmens gekoppelt ist.

3. Expansionswerkzeug nach Anspruch 2, wobei die Haltehülse dazu konfiguriert ist, gewindemäßig an das Verbindungsende gekoppelt zu sein.

4. Expansionswerkzeug nach einem vorhergehenden Anspruch, wobei die Vielzahl von Backen eine erste Vielzahl von Backen ist und die erste Vielzahl von Backen mit einer zweiten Vielzahl von Backen austauschbar ist.

5. Expansionswerkzeug nach Anspruch 4, wobei jede Backe der zweiten Vielzahl von Backen eine Aussparung (2020a, 2022) beinhaltet, die in einer Hinterfläche der Backe gebildet ist, und jede Aussparung dazu konfiguriert ist, einen entsprechenden der Vielzahl von Zähnen aufzunehmen, um die zweite Vielzahl von Backen zum Mitdrehen mit dem Bund zu koppeln.

6. Expansionswerkzeug nach einem vorhergehenden Anspruch, wobei der Antriebsmechanismus in einer Hochgeschwindigkeitskonfiguration und einer Niedriggeschwindigkeitskonfiguration betreibbar ist und wobei das Expansionswerkzeug ferner umfasst:
eine Schaltanordnung (1000), die einen Aktor (1002) beinhaltet, der betreibbar ist, um den Antriebsmechanismus zwischen der Hochgeschwindigkeitskonfiguration und der Niedriggeschwindigkeitskonfiguration zu schalten; und
einen Schaltdetektor (1006), der dazu konfiguriert ist, ein Schalten zwischen der Hochgeschwindigkeitskonfiguration und der Niedriggeschwindigkeitskonfiguration zu detektieren.

7. Expansionswerkzeug nach einem vorhergehenden Anspruch, ferner umfassend einen Kegel (130a, 130b), der innerhalb der Vielzahl von Backen aufgenommen und mit den Innenflächen der Vielzahl von Backen in Eingriff bringbar ist, wobei der Dorn dazu konfiguriert ist, in den Kegel einzugreifen, um den Kegel mit dem Dorn zu bewegen, um die Backen zu expandieren, wenn sich der Dorn hin zu der ausgefahrenen Position bewegt.

8. Expansionswerkzeug nach Anspruch 7, wobei der Kegel eine Vielzahl von Nuten (150) beinhaltet, die Fett enthalten, um die Innenflächen der Vielzahl Backen zu schmieren.

9. Expansionswerkzeug nach Anspruch 7, wobei der Kegel eine Vielzahl von Bohrungen (146) beinhaltet, die sich von einer konischen Außenfläche (134) zu einer Innenbohrung (138) erstrecken, wobei die Bohrungen Fluidwege definieren, um Schmiermittel zwischen der Innenbohrung und einer Außenfläche des Kegels zu befördern.

10. Expansionswerkzeug nach Anspruch 6, wobei der Schaltdetektor einen Mikroschalter (1007) beinhaltet.

11. Expansionswerkzeug nach Anspruch 10, wobei die Schaltanordnung einen Schaltarm (1004) beinhaltet, der mit dem Mikroschalter in Eingriff bringbar ist.

12. Expansionswerkzeug nach Anspruch 6, 10 oder 11, ferner umfassend einen Motor (30), der dazu konfiguriert ist, den drehbaren Nocken über den Antriebsmechanismus zu drehen, und eine Steuerung (1010) in Kommunikation mit dem Schaltdetektor, wobei die Steuerung dazu konfiguriert ist, den Motor als Reaktion darauf, dass der Schaltdetektor das Schalten detektiert, abzuschalten.

13. Expansionswerkzeug nach Anspruch 12, ferner umfassend einen Indikator, wobei die Steuerung dazu konfiguriert ist, den Indikator als Reaktion darauf, dass der Schaltdetektor das Schalten detektiert, zu beleuchten.

14. Expansionswerkzeug nach Anspruch 6, 10 oder 11, wobei der Antriebsmechanismus ein mehrstufiges Planetengetriebe (76) umfasst, wobei das Getriebe ein bewegbares Ringrad (1008) und einen Sicherungsring (1011) beinhaltet, wobei das bewegbare Ringrad in der Niedriggeschwindigkeitskonfiguration mit dem Sicherungsring in Eingriff steht, und wobei das bewegbare Ringrad in der Hochgeschwindigkeitskonfiguration von dem Sicherungsring losgelöst ist.

15. Expansionswerkzeug nach Anspruch 7, wobei der Kegel Mittel (138, 146, 150) zur Aufnahme von Fett, zum Schmieren der Innenflächen der Vielzahl von Backen, beinhaltet.

## Revendications

1. Outil d'expansion (10), comprenant :
un boîtier (12) ;
un collier (220) couplé de manière rotative au boîtier (12), le collier étant doté d'une pluralité de fentes (2008) ;
une pluralité de mâchoires (114, 114a), chaque mâchoire comportant une saillie (2018) qui vient se loger dans une fente correspondante de la pluralité de fentes (2008), de sorte que les mâchoires (114a) (114) sont couplées pour effectuer une co-rotation avec le collier ;
un mandrin (50) déplaçable par rapport au boîtier (12) entre une position rétractée et une position déployée, le mandrin (50) pouvant entrer en prise avec les mâchoires pour écarter les mâchoires répondant au mouvement du mandrin (50) vers la position déployée ;
un mécanisme d'entraînement (34) comprenant une came rotative (86), dans lequel la rotation de la came (86) déplace le mandrin (50) entre la position rétractée et la position déployée ; et
un mécanisme de rotation (200) configuré pour faire tourner le collier de manière incrémentielle, **caractérisé en ce que** :
le collier (220) comprend une surface frontale (2006) faisant face aux mâchoires, et les fentes (2008) s'étendent dans une direction vers l'arrière à partir de la surface frontale ; et
le collier comprend une pluralité de dents (2010) s'étendant dans une direction vers l'avant à partir de la surface frontale.

2. Outil d'expansion selon la revendication 1, dans lequel le boîtier, au moins en partie, entoure un cadre (104) doté d'une extrémité de raccordement (2000), dans lequel l'outil d'expansion comprend en outre un manchon de retenue (2012) entourant la pluralité des mâchoires, et dans lequel la pluralité des mâchoires est configurée pour être couplée au boîtier en joignant le manchon de retenue à l'extrémité de raccordement du cadre.

3. Outil d'expansion selon la revendication 2, dans lequel le manchon de retenue est configuré pour être couplé par filetage à l'extrémité de raccordement.

4. Outil d'expansion selon l'une quelconque des revendications précédentes, dans lequel la pluralité des mâchoires est une première pluralité de mâchoires, et la première pluralité de mâchoires est échangeable avec une seconde pluralité de mâchoires.

5. Outil d'expansion selon la revendication 4, dans lequel chaque mâchoire de la seconde pluralité de mâchoires comprend un évidement (2020a, 2022) formé dans une surface arrière de la mâchoire, et chaque évidement est configuré pour recevoir une dent correspondante de la pluralité de dents pour coupler la seconde pluralité de mâchoires en co-rotation avec le collier.

6. Outil d'expansion selon l'une quelconque des revendications précédentes, dans lequel le mécanisme d'entraînement peut être utilisé dans une configuration à haute vitesse et une configuration à basse vitesse, et dans lequel l'outil d'expansion comprend en outre :
un ensemble de commutation (1000) doté d'un actionneur (1002) permettant de faire passer le mécanisme d'entraînement de la configuration à haute vitesse à la configuration à basse vitesse ; et
un détecteur de commutation (1006) configuré pour détecter une commutation entre la configuration à haute vitesse et la configuration à basse vitesse.

7. Outil d'expansion selon l'une quelconque des revendications précédentes, comprenant en outre un cône (130a, 130b) que reçoit la pluralité de mâchoires et pouvant entrer en prise avec des surfaces internes de la pluralité de mâchoires, dans lequel le mandrin est configuré pour entrer en prise avec le cône afin de déplacer le cône avec le mandrin et ainsi écarter les mâchoires alors que le mandrin se déplace vers la position déployée.

8. Outil d'expansion selon la revendication 7, dans lequel le cône comprend une pluralité de rainures (150) contenant de la graisse pour lubrifier les surfaces internes de la pluralité de mâchoires.

9. Outil d'expansion selon la revendication 7, dans lequel le cône comprend une pluralité d'alésages coniques (146) s'étendant d'une surface conique externe (134) jusqu'à un alésage interne (138), les alésages définissant des voies d'écoulement de fluide permettant d'acheminer du lubrifiant entre l'alésage interne et une surface externe du cône.

10. Outil d'expansion selon la revendication 6, dans lequel le détecteur de commutation comprend un microrupteur (1007).

11. outil d'expansion selon la revendication 10, dans lequel l'ensemble de commutation comprend un bras de commutation (1004) pouvant entrer en prise avec le microrupteur.

12. Outil d'expansion selon les revendications 6, 10 ou 11, comprenant en outre un moteur (30) configuré pour faire tourner la came rotative au moyen du mécanisme d'entraînement et un contrôleur (1010) en communication avec le détecteur de commutation, dans lequel le contrôleur est configuré pour désexciter le moteur au moment de la détection de la commutation par le détecteur de commutation.

13. Outil d'expansion selon la revendication 12, comprenant en outre un indicateur, dans lequel le contrôleur est configuré pour éclairer l'indicateur au moment de la détection de la commutation par le détecteur de commutation.

14. Outil d'expansion selon les revendications 6, 10 ou 11, dans lequel le mécanisme d'entraînement comprend une transmission planétaire à plusieurs étages (76), dans lequel la transmission comprend une couronne dentée mobile (1008) et une bague de verrouillage (1011), dans lequel la couronne dentée mobile est en prise avec la bague de verrouillage dans la configuration à basse vitesse, et dans lequel la couronne dentée mobile n'est pas en prise avec la bague de verrouillage dans la configuration à haute vitesse.

15. Outil d'expansion selon la revendication 7, dans lequel le cône comprend un dispositif (138, 146, 150) permettant de contenir de la graisse pour lubrifier les surfaces internes de la pluralité des mâchoires.
